# EUROPEAN PATENT APPLICATION

(11) **EP 4 094 624 A1**
(43) Date of publication of application: **30.11.2022**
(21) Application number: 21768457.0
(22) Date of filing: 10.03.2021
(51) Int. Cl.: A47B 37/04, A47B 3/02, A47B 13/08, A47B 97/00, H02S 40/30, H02S 30/20, H02S 20/10

(54) **SOLAR OUTDOOR MULTIFUNCTIONAL FOLDING TABLE**

(30) Priority: 12.03.2020 CN 202020300983 U
(71) Applicant: Chen, Meiyan, Hong Kong (CN)
(72) Inventor: JIANG, Chenhui, Dongguan Guangdong 523000 (CN)
(74) Representative: Zaboliene, Reda
(86) International application number: PCT/CN2021/079958
(87) International publication number: WO 2021/180116

(57) **Abstract**

Disclosed is a solar outdoor multifunctional folding table. A solar desktop (1) is composed of a plurality of photovoltaic panels (11) hinged to one another, when a user requires power supply, the photovoltaic panels (11) are unfolded and installed on a desktop support frame (2) and face the sun, that is, the photovoltaic panels (11) generate corresponding solar power which, when being processed by the output cable box (16) can supply power outdoor for electronic devices when the user can connect electronic devices to an output terminal of the output cable box (16). When the photovoltaic panels (11) are laid flat on the desktop support frame (2), the solar desktop (1) can be placed on various items and available for people to work on the table. The desktop support frame (2) and photovoltaic panels (11) can be folded and stored each other, greatly reducing the occupied space. The matching compass (34) and thermometer (35) allow the user to directly view the real-time temperature and direction at any time and anywhere. The thermometer (35) and compass (34) can be removed from the desktop support frame (2) and used separately

## Description

### Technology Field

The invention relates to the field of folding tables, in particular to a solar outdoor multifunctional folding table.

### Background Art

With the improvement of the economic income of residents, people's living standards and the scope of activities are getting larger and larger, outdoor leisure and entertainment activities have been favored by the masses, there are more and more activities, and the activity time is getting longer and longer. To facilitate outdoor dining, many people bring a portable folding table that can be used as a dining table when eating and an entertainment table or tea table when not eating. In order to enrich outdoor entertainment activities, many people often bring some portable electronic devices, such as audio equipment, laptops, IPAD, mobile phones and so on. Due to the long time of outdoor activities, emergency power supply should be configured when using audio equipment, laptop computer, IPAD and mobile phone for a long time, however, the use time is limited by the capacity of emergency power supply. In the prior art, the outdoor portable folding tables on the market are simple in structure, easy to carry, and have a single function, which can basically meet the use of traditional outdoor activities, but cannot meet the requirements of powering or charging mobile electronic devices during outdoor activities. Although solar panels can generate electricity, solar panels are fragile, inconvenient to transport and carry, prone to safety problems, and the reliability of equipment operation cannot be guaranteed. In view of the above problems, there is an urgent need to develop a table that can supply power or charge mobile devices, and can also satisfy people's outdoor activities. Therefore, many manufacturers and people of insight to develop and research, but there is no more satisfactory product come out.

### Summary

In order to solve the above problems, the invention provides a solar outdoor multifunctional folding table, which is simple in structure, can display temperature and orientation in real time, saves electricity, is environmentally friendly and energy-saving, to realize the function of outdoor power supply.

The invention can be achieved by adapting the following technical schemes:
A solar outdoor multifunctional folding table, comprising a solar desktop, a desktop support frame for supporting the solar desktop, wherein the solar desktop comprises output cable boxan output cable box, a plurality of photovoltaic panels arranged in sequence, adjacent photovoltaic panels being mutually hinged, and a fabric tablecloth is attached to a backside of each of the plurality of photovoltaic panels; the output cable box is disposed on the fabric tablecloth, wherein a main circuit board is disposed in the output cable box, an output port is further provided on an surface of the output cable box; output ends of the plurality of photovoltaic panels are connected to input end of the main control panel, and an output end of the main control panel is connected to the output port; wherein the solar desktop is detachably arranged on the desktop support frame, and the fabric tablecloth faces to the desktop support frame; and a thermometer and a compass are further arranged on one side of the desktop support frame.

Further, the solar outdoor multifunctional folding table further includes a cable box bag provided with an opening at one end, wherein the cable box bag is sewed to the fabric tablecloth and the output cable box is provided inside the cable box bag, and the main control board inside the output cable box is electrically connected to the photovoltaic panel through the output cable box and the cable box bag via wires, and the opening is provided with a seal to open or close the opening;
Further, the seal is a first magic tape or a zipper.

Further, the adjacent photovoltaic panels are sewn and connected by stitching fabric, the stitching fabric is provided with a hollow cavity extending along the side of the photovoltaic panels, the hollow cavity is provided with a first support rod, wherein the stitching fabric is provided on two sides of each photovoltaic panel; wherein front and rear ends of the stitching fabric located on two sides of the solar desktop are provided with first openings, and front and rear ends of the stitching fabric in the middle of the solar desktop are provided with second openings; the desktop support frame comprises first assembly parts detachably equipped at the first openings and sleeved on the first support rod, and second assembly parts detachably equipped at the second openings and sleeved on the first support rod, wherein the lower ends of the first assembly parts and that of the second assembly parts are provided with vertical rods extending in a vertical direction, and two sides of the second assembly parts at the front end of the solar desktop are respectively connected with the two first assembly parts at the front end of the solar desktop through horizontal rods extending in a horizontal direction; two sides of the second assembly parts at the rear end of the solar desktop are respectively connected with the two first assembly parts at the rear end of the solar desktop through horizontal rods extending in a horizontal direction; and the horizontal rods are arranged at a bottom of the solar desktop.

Further, the desktop support frame further comprises a plurality of third assembly parts, a plurality of first diagonal rods, a plurality of second diagonal rods, a plurality of third diagonal rods and a plurality of fourth diagonal rods, wherein the third assembly parts are connected to the end of each vertical rod away from the solar desktop, wherein the first assembly parts and the second assembly parts at the front end of the solar desktop are all connected to the corresponding third assembly part at the rear end of the solar desktop through the first diagonal rods, the first assembly parts and the second assembly parts at the rear end of the solar desktop are all connected to the corresponding third assembly part at the front end of the solar desktop through the second diagonal rods; two sides of the second assembly parts at the front end of the solar desktop are respectively connected to the third assembly parts at two sides of the front end of the solar desktop through the third diagonal rods; two sides of the second assembly parts at the rear end of the solar desktop are respectively connected to two third assembly parts at the rear end of the solar desktop through the third diagonal rods; the third assembly part in the middle of the front end of the solar desktop is connected with the two first assembly parts on two sides of the front end of the solar desktop through the fourth diagonal rods; the third assembly part in the middle of the rear end of the solar desktop is connected with the two first assembly parts on two sides of the rear end of the solar desktop through the fourth diagonal rods.

Further, a top end of the first assembly parts and a top end of the second assembly parts are provided with assembling slots for assembling with the first support rods, and one side of the first assembly parts and two sides of an upper end of the second assembly parts are provided with horizontal slots for assembling with the horizontal rods, a lower end of the first assembly parts and a lower end of the second assembly parts are both provided with vertical slots; wherein the back the first assembly parts at the front end of the solar desktop and the back the second assembly parts at the front end of the solar desktop are provided with first diagonal rod slots for assembling with the first diagonal rods, wherein a surface of the first assembly parts at the rear end of the solar desktop and a surface of the second assembly parts at the rear end of the solar desktop are provided with second diagonal rod slots for assembling with the second diagonal rods, both sides of each second assembly part are provided with third diagonal rod slots for assembling with the third diagonal rods, one side of each first assembly part is provided with a fourth diagonal rod slot for assembling with the fourth diagonal rods.

Further, the solar outdoor multifunctional folding table also comprises a bearing grid, wherein the bearing grid comprises a second support rod which is parallel to the horizontal rod, a fabric bottom web which is horizontally arranged, and a plurality of pieces of fabric connecting cloth, and two ends of the fabric bottom web are respectively provided with a fabric sleeve for accommodating the second support rod; wherein the second support rod is inserted in the fabric sleeve, one end of the fabric connecting cloth is sewn on the fabric sleeve, and the other end of the fabric connecting cloth is sleeved on the corresponding horizontal rod.

Further, a surface of the fabric connecting cloth is further sewed with a magic tape bandage.

Further, two or more first assembly parts are provided with installation slots, wherein the thermometer is detachably mounted in the installation slot of one of the first assembly parts, and the compass is detachably mounted in the installation slot of any other first assembly part..

The advantageous effects of the invention:
1. The solar desktop is detachably arranged on the desktop support frame, and due to the fact that the solar desktop is composed of the a plurality of photovoltaic panels which are hinged to one another, when a user needs power supply, the photovoltaic panels are unfolded and installed on the desktop support frame and face the sun, that is, the photovoltaic panels generate the corresponding solar power which, when being processed by the output cable box, can supply power outdoor for electronic device when the user connects an output terminal of the output cable box, the overall power-saving and environment-friendly effects are achieved, the structural design is reasonable, and the travel of people is greatly facilitated.
2. When the photovoltaic panels are laid flat on the desktop support frame, the solar desktop can be placed on various items and available for people to work on the table; and when the electric quantity of the electronic equipment is sufficient, a user can turn over the solar desktop, that is, the surface, with the fabric tablecloth, of the photovoltaic panel faces upwards, thereby the photovoltaic panel is more attractive.
3. In the present application, the output cable box is sleeved with a cable box bag, and the opening of the cable box bag is provided with a sealant to achieve sealing, so that overall storage is convenient, and the situation that the output cable box cannot work normally due to dust entering can be avoided.
4. The solar desktop in the application is composed of the a plurality of photovoltaic panels which are hinged to one another, and the desktop support frame can be folded and stored, that is, in non-working state, the desktop support frame and photovoltaic panels can be folded and stored, greatly reducing the occupied space, in addition, separate arrangement can be convenient for maintenance.
5. The thermometer and the compass provided in the invention can allow users to intuitively real-time temperature and direction; and the thermometer in the invention can be disassembled from the desktop support frame and used separately, which is more convenient and fast.
6. The matching compass and thermometer allow the user to directly view the real-time temperature and direction at any time and anywhere. The thermometer and compass in the present application can be removed from the desktop support frame and used separately..

### Brief Description of the Drawings

FIG. 1 shows a stereo structure of a solar outdoor multifunctional folding table in the invention.
FIG. 2 shows a stereo structure of a desktop support frame in the invention.
FIG. 3 shows a structure at the time that a fabric tablecloth in the solar desktop is upward in the invention.
FIG. 4 shows a structure of a cable box bag in the invention.
FIG. 5 shows a structure at the time that photovoltaic panels in the solar desktop are upward in the invention.
FIG. 6 shows an enlarged structure diagram at part A in FIG. 5 of the invention.
FIG. 7 shows an enlarged structure diagram at part B in FIG. 5 of the invention.
FIG. 8 shows an assembly principle diagram of a compass and a first assembly part in the invention.
FIG. 9 shows an assembly principle diagram of a thermometer and the first assembly part in the invention.
FIG. 10 shows a front view structural diagram of a bottom web in the invention.
FIG. 11 shows a cross-sectional view of FIG. 10 taken along a line A-A in the invention.

### Description of reference signs:

In the accompanying drawings:
1. solar desktop
11. photovoltaic panel
12. stitching fabric
13. first support rod
14. second opening
15. first opening
16. output cable box
17. cable box bag
171. zipper
18. Fabric tablecloth
2. desktop support frame
21. first assembly part
211. installation slot
22. second assembly part
23. vertical rod
24. horizontal rod
25. first diagonal rod
26. second diagonal rod
27. third diagonal rod
28. fourth diagonal rod
29. third assembly part
31. fabric bottom web
311. Magic tape bandage
32. connection block
33. second support rod
34. compass
34. thermometer.

### Description of the Embodiment

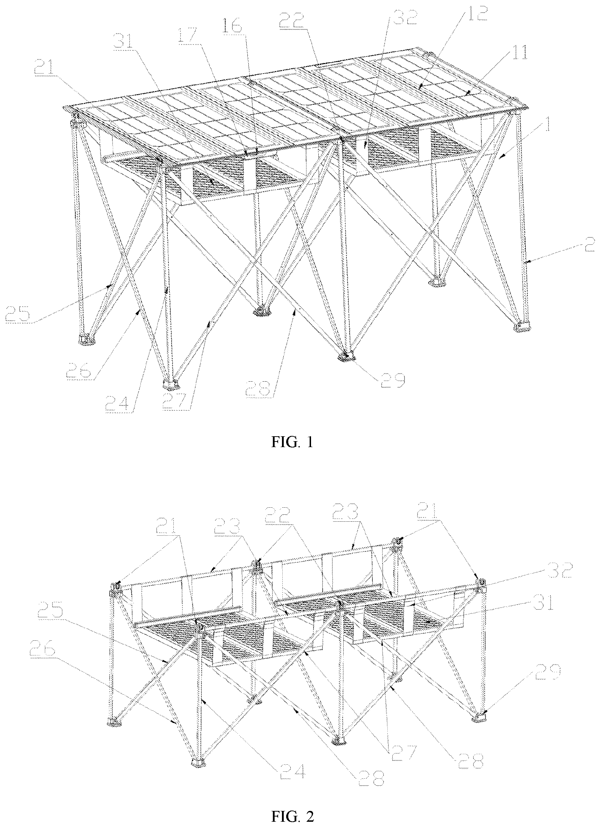

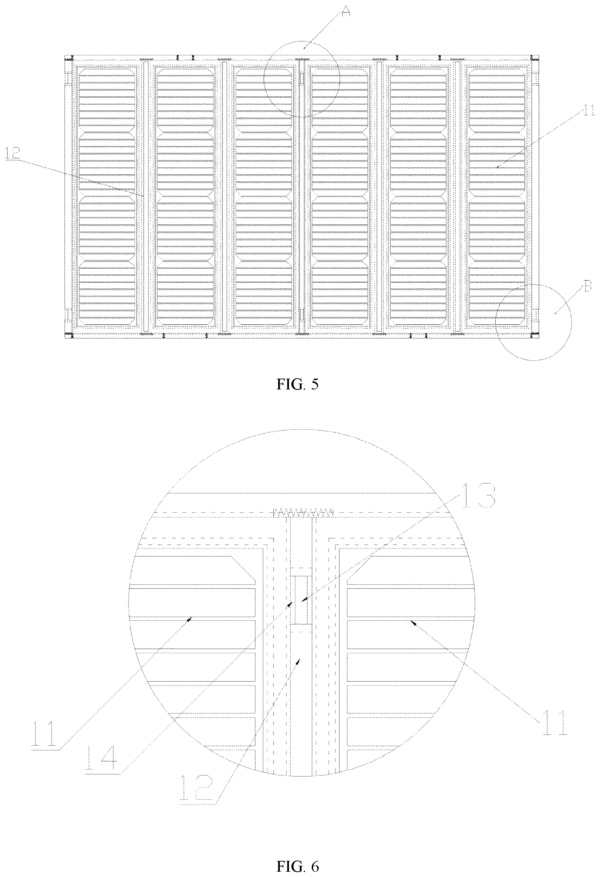

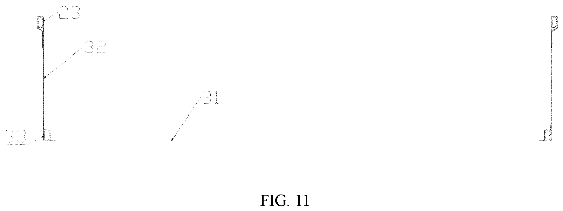

As shown in FIG. 1- FIG. 11, the invention relates to a solar outdoor multifunctional folding table comprising a solar desktop 1, a desktop support frame 2 for supporting the solar desktop 1, wherein the solar desktop 1 comprises output cable box 16, a plurality of photovoltaic panels 11arranged in sequence, adjacent photovoltaic panels 11being mutually hinged, and a fabric tablecloth 18 is attached to a backside of each of the plurality of photovoltaic panels 1; the output cable box 16 is disposed on the fabric tablecloth 18, wherein a main circuit board is disposed in the output cable box 16, an output port is further provided on an surface of the output cable box 16; output ends of the plurality of photovoltaic panels 11 are connected to input end of the main control panel, and an output end of the main control panel is connected to the output port; wherein the solar desktop 1 is detachably arranged on the desktop support frame 2, and the fabric tablecloth 18 faces to the desktop support frame 2; and a thermometer 35 and a compass 34 are further arranged on one side of the desktop support frame 2.

The solar desktop 1 is detachably mounted on the desktop support frame 2, as the solar desktop 1 in the present application consists of a number of mutually articulated photovoltaic panels 11, so when the user needs power supply, the photovoltaic panels 11 are unfolded and installed on the desktop support frame 2 and face the sun, that is, the photovoltaic panels 11 produce the corresponding solar power which, when being processed by the control output module 16, can supply power outdoor for electronic devices when the user connects the output terminals of the control output module 16. The utility model features overall power saving and environmental protection, reasonable structure design, and significantly improves people's travel.

When the photovoltaic panels 11 are laid flat on the desktop support frame 2, the solar desktop 1 can be placed on various items and available for people to work on the table; and when the electronic device is fully charged, the user can flip the solar desktop 1, that is, the side of the photovoltaic panels 11 with the fabric tablecloth face up, so that the utility model has a beautiful appearance.

The solar desktop 1 in the present application is composed of a plurality of photovoltaic panels 11 which are hinged to one another, and the desktop support frame 2 in the present application can be folded and stored, that is, in non-working state, the desktop support frame and the photovoltaic panels 11 can be folded and stored, greatly reducing the occupied space, in addition, separate arrangement can be convenient for maintenance.

The matching compass 34 and thermometer 35 allow the user to directly view the real-time temperature and direction at any time and anywhere. The thermometer 35 and compass 34 in the present application can be removed from the desktop support frame 2 and used separately, which is more convenient and faster.

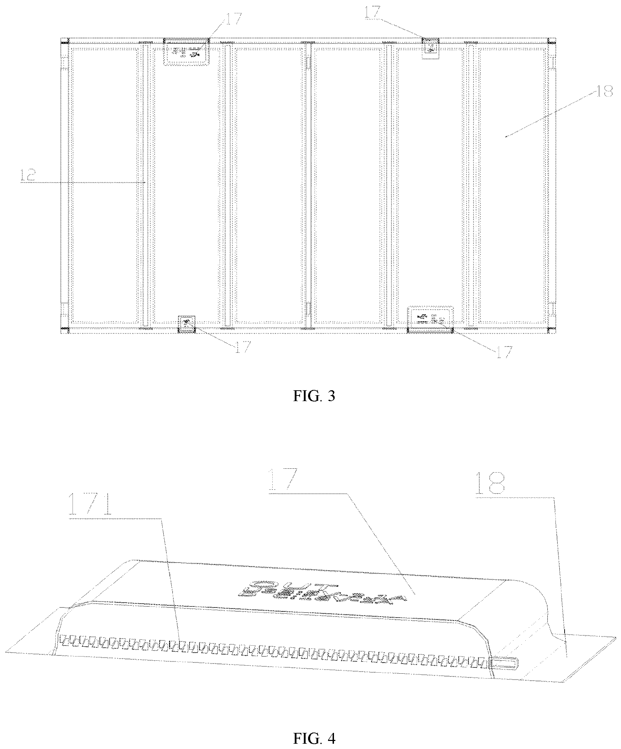

Referring to FIGS. 3-4, further, the solar outdoor multifunctional folding table further includes a cable box bag 17 provided with an opening at one end, wherein the cable box bag 17 is sewed to the fabric tablecloth 18 and the output cable box 16 is provided inside the cable box bag 17, and the main control board inside the output cable box 16 is electrically connected to the photovoltaic panel 11 through the output cable box 16 and the cable box bag 17 via wires, and the opening is provided with a seal to open or close the opening.

Referring to FIG. 4, in the present application, the output cable box 16 is sleeved with a cable box bag 17, and the opening of the cable box bag is provided with a zipper 171 to achieve sealing, so that overall storage is convenient, and the situation that the output cable box 16 cannot work normally due to dust entering can be avoided. Further, the seal is a first magic tape bandage or a zipper 16.

Referring to FIGS. 3-7, further, the adjacent photovoltaic panels 11 are sewn and connected by stitching fabric 12, the stitching fabric 12 is provided with a hollow cavity extending along the side of the photovoltaic panels 11, the hollow cavity is provided with a first support rod 13, wherein the stitching fabric 12 is provided on two sides of each photovoltaic panel 11; wherein front and rear ends of the stitching fabric 12 located on two sides of the solar desktop 1 are provided with first openings 15, and front and rear ends of the stitching fabric 12 in the middle of the solar desktop are provided with second openings 14; the desktop support frame 2 comprises first assembly parts 21 detachably equipped at the first openings 15 and sleeved on the first support rod 13, and second assembly parts 22 detachably equipped at the second openings 14 and sleeved on the first support rod 13, wherein the lower ends of the first assembly parts 21 and that of the second assembly parts 22 are provided with vertical rods 24 extending in a vertical direction, and two sides of the second assembly parts 22 at the front end of the solar desktop 1 are respectively connected with the two first assembly parts 21 at the front end of the solar desktop 1 through horizontal rods 23 extending in a horizontal direction; two sides of the second assembly parts 22 at the rear end of the solar desktop 1 are respectively connected with the two first assembly parts 21 at the rear end of the solar desktop 1 through horizontal rods 23 extending in a horizontal direction; and the horizontal rods 23 are arranged at a bottom of the solar desktop 1.

In this specific embodiment, due to the characteristics of the stitching fabric 12, a plurality of photovoltaic panels 11 can be folded and accommodated with each other, and the first support rod 13 in the hollow cavity can be used to assemble with the desktop support frame 2, and at the same time, the stability between the photovoltaic panels 11 can be increased, wherein the most basic frame is constructed by the horizontal rods 23 and the vertical rods 24. Moreover, the solar desktop 1 is placed on the desktop support frame 2, and the horizontal rods 23 can support the bottom surfaces of the plurality of photovoltaic panels 11, so that the photovoltaic panels 11 can be stabilized.

Referring to FIGS. 1-2, further, the desktop support frame 2further comprises a plurality of third assembly parts 29, a plurality of first diagonal rods 25, a plurality of second diagonal rods 26, a plurality of third diagonal rods 27 and a plurality of fourth diagonal rods 28, wherein the third assembly parts 29 are connected to the end of each vertical rod 24 away from the solar desktop 1, wherein the first assembly parts 21 and the second assembly parts 22 at the front end of the solar desktop 1 are all connected to the corresponding third assembly part 29 at the rear end of the solar desktop 1 through the first diagonal rods 25, the first assembly parts 21 and the second assembly parts 22 at the rear end of the solar desktop 1 are all connected to the corresponding third assembly part 29 at the front end of the solar desktop 1 through the second diagonal rods 26; two sides of the second assembly parts 22 at the front end of the solar desktop 1 are respectively connected to the third assembly parts 29 at two sides of the front end of the solar desktop 1 through the third diagonal rods 27; two sides of the second assembly parts 22 at the rear end of the solar desktop 1 are respectively connected to two third assembly parts 29 at the rear end of the solar desktop 1 through the third diagonal rods 27; the third assembly part 29 in the middle of the front end of the solar desktop 1 is connected with the two first assembly parts 29 on two sides of the front end of the solar desktop 1 through the fourth diagonal rods 28; the third assembly part 29 in the middle of the rear end of the solar desktop (1) is connected with the two first assembly parts 21 on two sides of the rear end of the solar desktop 1 through the fourth diagonal rods 28.

Referring to FIG. 2, the first diagonal rods 25, the second diagonal rods 26, the third diagonal rods 27, the fourth diagonal rods 28 are constructed into a plurality of stable triangular structure, thereby the whole desktop support frame 2 is more stable, that is, after the horizontal rods 23 are removed, each vertical rod 24 can be pushed to the middle, and due to the first diagonal rods 25, the second diagonal rods 26, the third diagonal rods 27, the fourth diagonal rods 28 and the corresponding first assembly parts 21, the second assembly parts 22, the third assembly parts 29 are hinged with each other when assembling, that is, the folding and storage of the whole desktop support frame 2 can be realized, greatly reducing the occupation of space.

Further, the top end of the first assembly parts 21 and the top end of the second assembly parts 22 are provided with assembling slots for assembling with the first support rods 13, and one side of the first assembly parts 21 and both sides of the upper end of the second assembly parts 22 are provided with the horizontal slots for assembling with the horizontal rods 23, the lower end of the first assembly parts 21 and the lower end of the second assembly parts 22 are both provided with vertical slots; wherein the back the first assembly parts 21 at the front end of the solar desktop 1 and the back the second assembly parts 22 at the front end of the solar desktop 1 are provided with first diagonal rod slots for assembling with first diagonal rods 25, wherein the surface of the first assembly parts 21 at the rear end of the solar desktop 1 and the surface of the second assembly parts 22 at the rear end of the solar desktop 1 are provided with second diagonal rod slots for assembling with the second diagonal rods 26, both sides of each second assembly part 22 are provided with third diagonal rod slots for assembling with the third diagonal rods 27, one side of each first assembly part 21 is provided with fourth diagonal rod slot for assembling with the fourth diagonal rods 28.

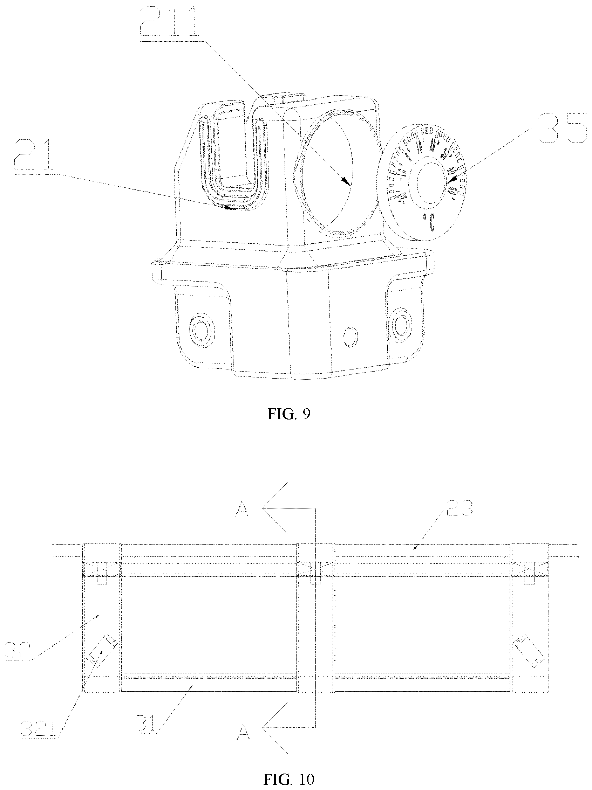

Referring to FIGS. 10-11, further, the solar outdoor multifunctional folding table also comprises a bearing grid, wherein the bearing grid comprises a second support rod 33 which is parallel to the horizontal rod, a fabric bottom web 31 which is horizontally arranged, and a plurality of pieces of fabric connecting cloth 32, and two ends of the fabric bottom web 31 are respectively provided with a fabric sleeve for accommodating the second support rod 33; wherein the second supporting rod 33 is inserted in the fabric sleeve, one end of the fabric connecting cloth 32 is sewn on the fabric sleeve, and the other end of the fabric connecting cloth 32 is sleeved on the corresponding horizontal rod 23. The bearing grid can be used as a drawer, which can place various articles on the surface of the bottom web 31. As the fabric bottom web and the fabric connecting cloth in the present application are fabric cloth, the arranged second support rod can play a role in stabilizing the whole bearing grid.

Referring to FIGS. 10-11, further, a surface of the fabric connecting cloth 32 is further sewed with a magic tape bandage 321. The magic tape bandage 321 may bind the fabric connecting cloth 32 to the third diagonal rod 27 or the fourth diagonal rod 28. In the present application, the fabric connecting cloth 32 located on both sides of the same end (front end or rear end) of the fabric bottom web 31 is respectively bound with the corresponding third diagonal rod 27 or fourth diagonal rod 28 through the magic tap bandage 321, which can further stabilize the bearing grid and prevent the bearing grid from being thrown around.

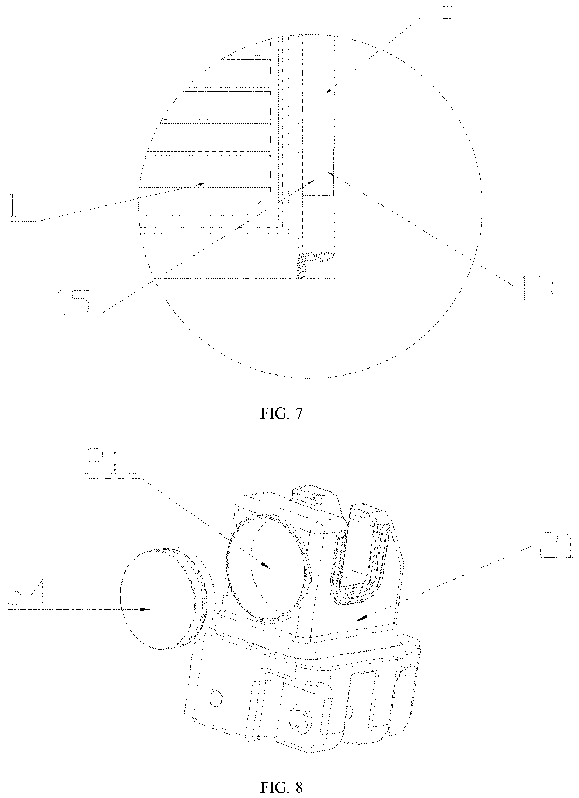

Referring to FIGS. 8-9, further, two or more first assembly parts 21 are provided with installation slot 211, wherein the thermometer 25 is detachably arranged in the installation slot 211 on one of the first assembly parts 21, and the compass 34 is detachably mounted in the installation slot of any other first assembly part. The compass 33 and the thermometer 34 can allow users to directly view the real-time temperature and direction at any time and anywhere; and the thermometer 35 and compass 34 in the present application can be disassembled from the installation slot 211 and used separately, which is more convenient and faster.

The above embodiments are only a description of the utility model, not a limitation of the scope of the utility model. Without departing from the spirit of the utility model design, all the modifications and improvements made by those skilled in the art to the technical solution of the utility model shall fall within the scope of protection defined in the claims of the utility models.

## Claims

1. A solar outdoor multifunctional folding table, **characterized in** comprising a solar desktop (1), a desktop support frame (2) for supporting the solar desktop (1), wherein the solar desktop (1) comprises output cable box (16), a plurality of photovoltaic panels (11)arranged in sequence, adjacent photovoltaic panels (11)being mutually hinged, and a fabric tablecloth (18) is attached to a backside of each of the plurality of photovoltaic panels (11) ; the output cable box (16) is disposed on the fabric tablecloth (18), wherein a main circuit board is disposed in the output cable box (16), an output port is further provided on an surface of the output cable box (16); output ends of the plurality of photovoltaic panels (11) are connected to input end of the main control panel, and an output end of the main control panel is connected to the output port; wherein the solar desktop (1) is detachably arranged on the desktop support frame (2), and the fabric tablecloth (18) faces to the desktop support frame (2); and a thermometer (35) and a compass (34) are further arranged on one side of the desktop support frame (2)..

2. The solar outdoor multifunctional folding table of claim 1, **characterized in** further comprising a cable box bag (17) provided with an opening at one end, wherein the cable box bag (17) is sewed to the fabric tablecloth (18) and the output cable box (16) is provided inside the cable box bag (17), and the main control board inside the output cable box (16) is electrically connected to the photovoltaic panel (11) through the output cable box (16) and the cable box bag (17) via wires, and the opening is provided with a seal to open or close the opening.;

3. The solar outdoor multifunctional folding table of claim 2, **characterized in that** the seal is a first magic tape or a zipper (171).

4. The solar outdoor multifunctional folding table of claim 1, **characterized in that** the adjacent photovoltaic panels (11) are sewn and connected by stitching fabric (12), the stitching fabric (12) is provided with a hollow cavity extending along the side of the photovoltaic panels (11), the hollow cavity is provided with a first support rod (13), wherein the stitching fabric (12) is provided on two sides of each photovoltaic panel (11); wherein front and rear ends of the stitching fabric (12) located on two sides of the solar desktop (1) are provided with first openings (15), and front and rear ends of the stitching fabric (12) in the middle of the solar desktop are provided with second openings (14); the desktop support frame (2) comprises first assembly parts (21) detachably equipped at the first openings (15) and sleeved on the first support rod (13), and second assembly parts (22) detachably equipped at the second openings (14) and sleeved on the first support rod (13), wherein the lower ends of the first assembly parts (21) and that of the second assembly parts (22) are provided with vertical rods (24) extending in a vertical direction, and two sides of the second assembly parts (22) at the front end of the solar desktop (1) are respectively connected with the two first assembly parts (21) at the front end of the solar desktop (1) through horizontal rods (23) extending in a horizontal direction; two sides of the second assembly parts (22) at the rear end of the solar desktop (1) are respectively connected with the two first assembly parts (21) at the rear end of the solar desktop (1) through horizontal rods (23) extending in a horizontal direction; and the horizontal rods (23) are arranged at a bottom of the solar desktop (1).

5. The solar outdoor multifunctional folding table of claim 4, **characterized in that** the desktop support frame (2)further comprises a plurality of third assembly parts (29), a plurality of first diagonal rods (25), a plurality of second diagonal rods (26), a plurality of third diagonal rods (27) and a plurality of fourth diagonal rods (28), wherein the third assembly parts (29) are connected to the end of each vertical rod (24) away from the solar desktop (1), wherein the first assembly parts (21) and the second assembly parts (22) at the front end of the solar desktop (1) are all connected to the corresponding third assembly part (29) at the rear end of the solar desktop (1) through the first diagonal rods (25), the first assembly parts (21) and the second assembly parts (22) at the rear end of the solar desktop (1) are all connected to the corresponding third assembly part (29) at the front end of the solar desktop (1) through the second diagonal rods (26); two sides of the second assembly parts (22) at the front end of the solar desktop (1) are respectively connected to the third assembly parts (29) at two sides of the front end of the solar desktop (1) through the third diagonal rods (27); two sides of the second assembly parts (22) at the rear end of the solar desktop (1) are respectively connected to two third assembly parts (29) at the rear end of the solar desktop (1) through the third diagonal rods (27); the third assembly part (29) in the middle of the front end of the solar desktop (1) is connected with the two first assembly parts (21) on two sides of the front end of the solar desktop (1) through the fourth diagonal rods (28); the third assembly part (29) in the middle of the rear end of the solar desktop (1) is connected with the two first assembly parts (21) on two sides of the rear end of the solar desktop (1) through the fourth diagonal rods (28).

6. The solar outdoor multifunctional folding table of claim 5, **characterized in that** a top end of the first assembly parts (21) and a top end of the second assembly parts (22) are provided with assembling slots for assembling with the first support rods (13), and one side of the first assembly parts (21) and two sides of an upper end of the second assembly parts (22) are provided with horizontal slots for assembling with the horizontal rods (23), a lower end of the first assembly parts (21) and a lower end of the second assembly parts (22) are both provided with vertical slots; wherein the back the first assembly parts (21) at the front end of the solar desktop (1) and the back the second assembly parts (22) at the front end of the solar desktop (1) are provided with first diagonal rod slots for assembling with the first diagonal rods (25), wherein a surface of the first assembly parts (21) at the rear end of the solar desktop (1) and a surface of the second assembly parts (22) at the rear end of the solar desktop (1) are provided with second diagonal rod slots for assembling with the second diagonal rods (26), both sides of each second assembly part (22) are provided with third diagonal rod slots for assembling with the third diagonal rods (27), one side of each first assembly part (21) is provided with a fourth diagonal rod slot for assembling with the fourth diagonal rods (28).

7. The solar outdoor multifunctional folding table of claim 4, **characterized in** further comprising a bearing grid, wherein the bearing grid comprises a second support rod (33) which is parallel to the horizontal rod, a fabric bottom web (31) which is horizontally arranged, and a plurality of pieces of fabric connecting cloth (32), and two ends of the fabric bottom web (31) are respectively provided with a fabric sleeve for accommodating the second support rod (33); wherein the second supporting rod (33) is inserted in the fabric sleeve, one end of the fabric connecting cloth (32) is sewn on the fabric sleeve, and the other end of the fabric connecting cloth (32) is sleeved on the corresponding horizontal rod (23).

8. The solar outdoor multifunctional folding table of claim 7, **characterized in that** a surface of the fabric connecting cloth (32) is further sewed with a magic tape bandage (321).

9. The solar outdoor multifunctional folding table of claim 6, **characterized in that** two or more first assembly parts (21) are provided with installation slots (211), wherein the thermometer (35) is detachably mounted in the installation slot (211) of one of the first assembly parts (21), and the compass (34) is detachably mounted in the installation slot (211) of any other first assembly part (21)..
